# EUROPÄISCHE PATENTSCHRIFT

(11) **EP 1 659 669 B1**
(45) Veröffentlichungstag und Bekanntmachung des Hinweises auf die Patenterteilung: **31.12.2014**
(21) Anmeldenummer: 05110805.8
(22) Anmeldetag: 16.11.2005
(51) Int. Cl.: H02G 5/06

(54) **Scheibenisolator**
Insulation disc
Disque isolant

(30) Priorität: 18.11.2004 DE 102004056160
(43) Veröffentlichungstag der Anmeldung: 24.05.2006
(73) Patentinhaber: Siemens Aktiengesellschaft, 80333 München (DE)
(72) Erfinder: Meinherz, Manfred, 13467, Berlin (DE); Sorowski, Christoph, 13591, Berlin (DE)

(56) Entgegenhaltungen:
- DE-A1- 2 526 671
- JP-A- 3 082 305
- JP-A- 63 011 014
- US-A- 3 906 149

## Beschreibung

Die Erfindung betrifft einen Scheibenisolator mit einem Isolierkörper und mit einer ersten und einer zweiten Anpressfläche sowie mit zumindest einem sich in axialer Richtung senkrecht zu den Anpressflächen erstreckenden, den Isolierkörper durchsetzenden elektrischen Leiter, welcher auf der Seite der ersten Anpressfläche einen ersten Steckkontakt und auf der Seite der zweiten Anpressfläche einen zweiten Steckkontakt aufweist, wobei der elektrische Leiter in den Isolierkörper eingebettet ist und im Bereich der Einbettung einen konvexen Abschnitt aufweist.

Ein Scheibenisolator ist beispielsweise aus der Patentschrift US 5,571,990 bekannt. Der in der dortigen Figur 1 gezeigte Scheibenisolator weist einen Isolierkörper mit einer konischen Struktur auf, der von einem elektrischen Leiter durchsetzt ist. Im Randbereich ist der bekannte Scheibenisolator mit zwei Anpressflächen versehen, welche der Einspannung und Halterung dienen. Senkrecht zu den Anpressflächen erstreckt sich in axialer Richtung der elektrische Leiter. Der elektrische Leiter ist mit dem Scheibenisolator verbunden und weist einen ersten und einen zweiten Steckkontakt auf. In die Steckkontakte ist jeweils ein rohrförmiges Leiterelement eingeschoben. Die angesteckten rohrförmigen Leiterelemente stoßen im Bereich der Befestigung des elektrischen Leiters an dem Isolierkörper des Scheibenisolators zusammen. Über den elektrischen Leiter wird eine Kontaktierung der beiden eingeschobenen rohrförmigen Leitelemente gewährleistet. Die stirnseitigen Öffnungen des elektrischen Leiters sind mit Schirmelementen zur Steuerung von elektrischen Feldern versehen. Die Schirmelemente sind als separate Baugruppen ausgestaltet.

Aus dem US-Patent US 3,906,149 ist ein Scheibenisolator bekannt, bei welchem ein elektrischer Leiter einen Isolierkörper durchsetzt, wobei der elektrische Leiter verschraubt wird. Zur Abdichtung der Verschraubung ist die Verwendung eines Dichtringes notwendig. Aus der Offenlegungsschrift DE 25 26 671 A1 ist eine Isolieranordnung für Hochspannung bekannt, bei welcher ein elektrischer Leiter innerhalb eines Isolierkörpers eingebettet ist. Zur Kontaktierung des eingebetteten elektrischen Leiter stoßen so genannte Abschirmelektroden stumpf an gegensinnig orientierte Kontaktflächen an. Aus der japanischen Offenlegungsschrift JP3-82305 geht ein Scheibenisolator hervor, welcher einen elektrischen Leiter aufweist, der eine zylindrische Kontur aufweist und bündig in einen Isolierkörper eingebettet ist. Steckkontakte sind in separaten Kontakttulpen angeordnet. Die Kontakttulpen werden in gegensinniger Richtung stumpf gegen den eingebetteten elektrischen Leiter gepresst. Aus der japanischen Offenlegungsschrift JP63-11014 geht ein Scheibenisolator hervor, in dessen Isolierkörper ein elektrischer Leiter eingebettet ist. Der elektrische Leiter durchsetzt den Isolierkörper und ist beiderseits des Isolierkörpers mit Steckkontakten ausgestattet. Die Steckkontakte erstrecken sich in voneinander entgegengesetzte Richtungen.

Eine derartige Konstruktion weist den Nachteil auf, dass die Steckkontakte in axialer Richtung den Isolierkörper überragen. Dadurch wird ein Lagern sowie ein Einbauen des bekannten Scheibenisolators erschwert. Zwar wird durch die Verwendung von Steckkontakten die Montage und Einbindung des Scheibenisolators in eine Elektroenergieübertragungsanlage erleichtert, jedoch vergrößern die Steckkontakte das Bauvolumen des bekannten Scheibenisolators nicht unerheblich.

Aufgabe der Erfindung ist es, einen Scheibenisolator mit einem elektrischen Leiter anzugeben, der bei hoher dielektrischer Festigkeit kompakte Abmaße aufweist.

Erfindungsgemäß wird die Aufgabe bei einem Scheibenisolator der eingangs genannten Art dadurch gelöst, dass der elektrische Leiter gasdicht in den Isolierkörper eingebettet ist und zumindest einer der Steckkontakte zumindest teilweise von dem konvexen Abschnitt umgeben ist.

Bei einer gasdichten Einbettung des elektrischen Leiters in den Isolierkörper wird eine innige Verbindung zwischen den beiden Baugruppen hergestellt. Der Einschluss von Hohlräumen im Fügebereich ist dabei nahezu ausgeschlossen. Dadurch ist ein Auftreten von Teilendladungen in dem Grenzbereich des Überganges von elektrisch leitendem Material zu elektrisch isolierendem Material nahezu vollständig verhindert. Durch einen konvexen Abschnitt des elektrischen Leiters wird die mechanische Stabilität der Verbindung erhöht. Eine axiale Verschiebung wird durch die Formgebung verhindert. Neben der erhöhten mechanischen Belastbarkeit der Fügestelle wird durch den konvexen Abschnitt die dielektrische Festigkeit erhöht. Bei einem Anstecken von elektrischen Leiterelementen an die Steckkontakte kann so die Verbindungsstelle zumindest teilweise durch die ausgebauchte Oberfläche geschirmt werden. Dadurch ergibt sich eine einfachere Bauform für die Steckkontakte und damit eine kostengünstige Herstellung der Gesamtanordnung. Von Vorteil ist es, wenn der konvexe Abschnitt rotationssymmetrisch um die axiale Richtung herum ausgeformt ist. So entsteht ein Abschnitt, dessen Umfang stetig zu- bzw. abnimmt. Eine derartige Form ist beispielsweise mittels eines gestauchten Zylinders herstellbar. Der konvexe Abschnitt weist so eine fassförmige Gestalt auf.

Die gasdichte Verbindung von elektrischem Leiter und Isolierkörper ist weiterhin eine Grundvoraussetzung, um beispielsweise den Scheibenisolator als Schottisolator auszugestalten.

Eine vorteilhafte Ausgestaltung kann vorsehen, dass der erste und der zweite Steckkontakt sich an den konvexen Abschnitt des Leiters anschließen.

Durch die Anordnung von Steckkontakten an dem konvexen Abschnitt des Leiters ergeben sich Vorteile für einen modulartigen Aufbau einer Elektroenergieübertragungseinrichtung. Zum Haltern von elektrischen Leiterelementen können erfindungsgemäße Scheibenisolatoren eingesetzt werden. Bei einer Anwendung einer Vielzahl von baugleichen Scheibenisolatoren ist es möglich, die zwischen ihnen abgestützten Leiterelemente ebenfalls gleichartig auszugestalten. Dadurch ergeben sich rationelle Fertigungsverfahren sowie Montagevorgänge. Bei einem unmittelbaren Ansetzen der Steckkontakte an den konvexen Abschnitt des Leiters ergibt sich in axialer Richtung ein geringer Platzbedarf. Dadurch ist es möglich, die Scheibenisolatoren universell anzuwenden. Die Scheibenisolatoren können sehr flexibel in Elektroenergieübertragungseinrichtungen eingesetzt werden, da der Abstand von einem Scheibenisolator zum nächsten Scheibenisolator frei wählbar ist und aufgrund der geringen Ausmaße einzuhaltende Mindestabstände vernachlässigbar gering sind.

Bei der erfindungsgemäßen Anordnung des konvex ausgebauchten Abschnittes um zumindest einen der Steckkontakte wird die Bautiefe des Scheibenisolators in axialer Richtung reduziert. So kann beispielsweise vorgesehen sein, dass bei einem entsprechend dickwandigen Isolierkörper die Steckkontakte weit in sein Inneres zurückgezogen angeordnet sind. An seinen Außenflächen sind dann lediglich die stirnseitigen Anschlüsse der Steckkontakte erkennbar. Bei einer derartigen Gestaltung weist der konvexe Abschnitt zumindest teilweise eine kalottenförmige Struktur auf.

Bei einem tiefen Zurückziehen eines der Steckkontakte in den konvexen Abschnitt kann die dielektrische Schirmwirkung des Abschnittes zusätzlich verstärkt werden.

Weiterhin kann vorteilhaft vorgesehen sein, dass der Isolierkörper eine konische Wölbung aufweist, unter welcher über einer Ebene in der eine der Anpressflächen liegt ein Aufnahmeraum gebildet ist, in welchem einer der Steckkontakte angeordnet ist.

Eine konische Wölbung gestattet es, einen Kriechweg auf der Oberfläche des Isolierkörpers zu verlängern. Der sich unter der Wölbung aufspannende Aufnahmeraum kann zur Aufnahme eines Steckkontaktes dienen. Dabei ist es besonders vorteilhaft, wenn der Steckkontakt vollständig innerhalb des Aufnahmeraumes liegt, das heißt, wenn keine Körperkante des Steckkontaktes die Ebene durchstößt. Damit ist ein derartiger Scheibenisolator Lagerung stapelbar und zur Montage in enge Zwischenräume einschiebbar.

Vorteilhafterweise kann vorgesehen sein, dass der elektrische Leiter zumindest im Bereich des konvexen Abschnittes eine gasdichte Wand aufweist.

Im Zusammenwirken mit der gasdichten Einbettung des elektrischen Leiters in den Isolierkörper kann die gasdichte Wand im Bereich des konvexen Abschnittes Teil eines Gasschottes sein. Somit sind Anordnungen ausbildbar, bei denen die Steckkontakte in voneinander getrennten Gasräumen liegen. Damit ist ein erfindungsgemäßer Scheibenisolator beispielsweise in gasisolierten Schaltanlagen einsetzbar, die verschieden voneinander zu trennende Gasräume aufweisen. Durch die Anordnung im Bereich des tonnenförmigen Abschnittes wird diese Wand dielektrisch gut geschirmt. Weiterhin kann diese Wand auch als Anschlag für die an die Steckkontakte anzusteckenden elektrischen Leiterelemente dienen. Die Einstecktiefe der elektrischen Leiterelemente wird durch die gasdichte Wand begrenzt. Somit entsteht eine stabile Verbindung der elektrischen Leiterelemente.

Vorteilhafterweise kann vorgesehen sein, dass beide Steckkontakte als Steckbuchse ausgebildet sind, oder dass beide Steckkontakte stiftförmig ausgestaltet sind.

Eine gleichartige Ausgestaltung der Steckkontakte gestattet es, die Scheibenisolatoren in beliebiger Ausrichtung in einen elektrischen Leiterzug einzubringen. Je nach Bedarf kann dabei eine Drehung um 180 Grad erfolgen.

Es kann jedoch auch vorteilhaft vorgesehen sein, dass einer der Steckkontakte als Steckbuchse und einer der Steckkontakte stiftförmig ausgestaltet ist.

Eine derartige Konfiguration der Steckkontakte ist dann vorteilhaft, wenn eine bestimmte Einbaulage bzw. Einbaurichtung der Scheibenisolatoren zwingend notwendig ist. Durch eine Abstimmung der entsprechenden Leiterelemente kann so einem fehlerhaften Einbau der Scheibenisolatoren vorgebeugt werden.

Eine weitere vorteilhafte Ausgestaltung kann vorsehen, dass der Isolierkörper ein Gießharzkörper ist.

Ein Giesharzkörper kann aufgrund der einzusetzenden Fertigungsverfahren vielfältige Formen aufweisen. So ist es mittels Giesverfahren beispielsweise einfach möglich, konische Erhebungen zu fertigen. Bei Bedarf können auf die Oberflächen des Isolierkörpers auch Rippen, Stege oder ähnliches aufgebracht werden. Diese können während des Gießens leicht an den Isolierkörper angeformt werden. Weiterhin weisen Giesharzkörper eine hohe Oberflächenqualität auf, so dass Nachbearbeitungen nur in einem begrenzten Umfange nötig sind. Gießharzkörper sind dazu geeignet, eine zuverlässige gasdichte Verbindungen zu dem elektrischen Leiter herzustellen. Dazu kann vorgesehen sein, dass der elektrische Leiter in den Gießharzkörper eingegossen wird. Während des Gießens weist das Gießharz eine wesentlich höhere Temperatur auf als der elektrische Leiter. Nach Abschluss des Gießvorganges kühlt das Gießharz aus. Damit ist ein zusätzliches Aufschrumpfen des Gießharzkörpers auf den elektrischen Leiter verbunden. So wird zum einen eine hohe mechanische Festigkeit der Verbindung erzielt, die zusätzlich durch die konvexe Formgebung des elektrischen Leiters unterstützt wird. Zum anderen ist so eine dauerhaft gasdichte Verbindung gewährleistet.

Im Folgenden werden Ausführungsbeispiele der Erfindung näher beschrieben und in Figuren schematisch gezeigt.

Dabei zeigt die
- Figur 1: einen Schnitt durch einen ersten Scheibenisolator, die
- Figur 2: ein Detail des ersten Scheibenisolators und die
- Figur 3: einen zweiten Scheibenisolator, der jedoch nicht Teil der Erfindung ist.

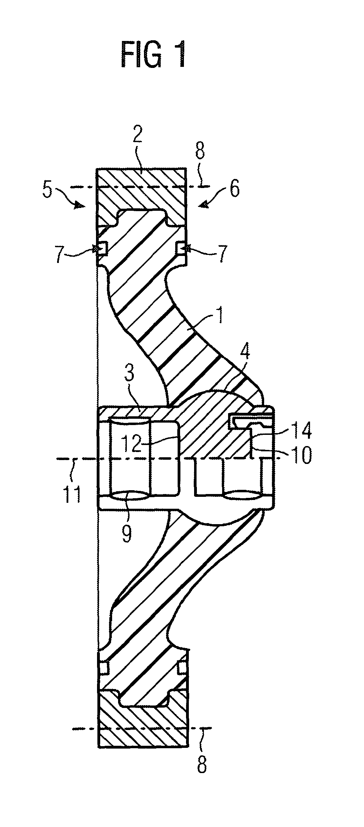

Der in der Figur 1 gezeigte erste Scheibenisolator weist einen Isolierkörper 1 auf. Weiterhin weist der Scheibenisolator einen metallischen Rahmen 2 auf, welcher sich ringförmig um die äußere Umfangsfläche des Isolierkörpers 1 erstreckt. Der metallische Rahmen 2 dient der Erhöhung der Stabilität des Scheibenisolators. Bei einer ausreichenden mechanischen Stabilität des Isolierkörpers 1 kann jedoch auch auf einen metallischen Rahmen verzichtet werden. Der Isolierkörper 1 ist von einem elektrischen Leiter 3 durchsetzt. Der elektrische Leiter 3 ist mit dem Isolierkörper 1 gasdicht verbunden und in diesem eingebettet. Im Bereich der Einbettung weist der elektrische Leiter 3 einen ausgebauchten, konvexen Abschnitt 4 auf. Der fassförmige Abschnitt 4 ist im Wesentlichen rotationssymmetrisch ausgestaltet. Der Scheibenisolator mit Isolierkörper 1 und elektrischem Leiter 3 nebst Steckkontakten weist eine rotationssymmetrische Gestalt um eine Symmetrieachse 11 auf. Im Bereich des metallischen Rahmens 2 und des Randes des Isolierkörpers 1 ist eine erste kreisringförmige Anpressfläche 5 und eine zweite kreisringförmige Anpressfläche 6 ausgebildet. Im vorliegenden Beispiel sind die kreisringförmigen Anpressflächen 5, 6 teilweise aus dem Isolierkörper 1 und teilweise aus dem metallischen Rahmen 2 gebildet. In dem Isolierkörper 1 sind in die kreisringförmigen Anpressflächen 5, 6 jeweils umlaufende Nuten 7 eingebracht. In diese Nuten können Dichtungsmaterialien wie beispielsweise O-Ringe eingelegt werden, wobei diese bei einem Verspannen der ersten und zweiten Anpressflächen 5, 6 gegen Flansche, beispielsweise eines Kapselungsgehäuses, eine gasdichte Abdichtung bewirken. Zur Verspannung sind im metallischen Rahmen durchgreifende Ausnehmungen 8 eingebracht, durch welche Bolzen zum Verspannen hindurchführbar sind.

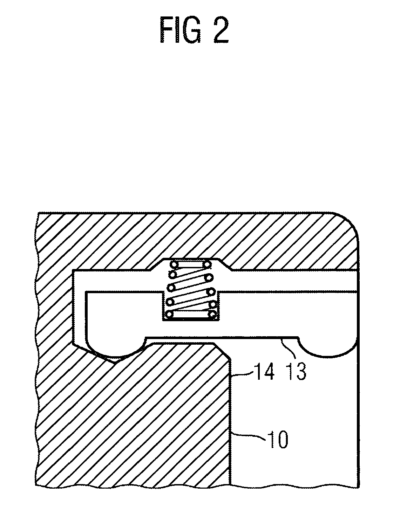

An den konvexen Abschnitt 4 erstreckt sich in axialer Richtung auf der Seite der ersten kreisringförmigen Anpressfläche 5 ein erster Steckkontakt 9. Auf der Seite der zweiten kreisringförmigen Anpressfläche 6 ist ein zweiter Steckkontakt 10 angeordnet. Der elektrische Leiter 3 liegt in seiner axialen Erstreckung senkrecht zu der ersten und der zweiten kreisringförmigen Anpressfläche 5, 6. Der erste Steckkontakt 9 ist in Form einer Steckbuchse ausgebildet. In ihn ist ein elektrisches Leiterelement, welches beispielsweise einen kreisförmigen Querschnitt aufweist, einsteckbar. Die Kontaktelemente des ersten Steckkontaktes 9 fahren dabei auf die äußere Mantelfläche des Leiterelementes auf und stellen so eine elektrische Kontaktierung her. Oberhalb der Symmetrieachse 11 ist die Ausgestaltung des zweiten Steckkontaktes 10 in Form einer Steckbuchse dargestellt, wobei die Steckbuchse teilweise in das Innere des konvexen Abschnittes 4 eingezogen ist. Einzelne Kontaktfinger sind dabei am Umfang der Buchse federbelastet angeordnet und kontaktieren einen zentralen Stützsockel 14 (siehe auch Figur 2 nebst zugehöriger Figurenbeschreibung).

Unterhalb der Symmetrieachse 11 ist ein nahezu vollständig von dem konvexen Abschnitt 4 überdeckter buchsenförmiger Steckkontakt dargestellt. Als Kontaktelemente sind beispielsweise in eine Vertiefung eingebrachte Lamellenbänder einsetzbar. Im Bereich des konvexen Abschnittes 4 des elektrischen Leiters 3 ist eine gasdichte Wand 12 angeordnet.

Aufgrund der Anordnung des ersten Steckkontaktes 9 vollständig innerhalb eines über der Ebene in der die erste Anpressfläche 5 liegt aufgespannten Aufnahmeraumes, der sich unter der konischen Auswölbung des Isolierkörpers befindet, sowie durch die Einziehung des zweiten Steckkontaktes 10 zumindest teilweise in den tonnenförmigen Abschnitt 4, entsteht ein Scheibenisolator mit einer geringen axialen Ausdehnung. Dieser kann auch in engen bzw. verwinkelten Anlagenabschnitten zum Einsatz gebracht werden.

In der Figur 2 ist ein Detail des oberhalb der Symmetrieachse in der Figur 1 gezeigten zweiten Steckkontaktes 10 dargestellt. Einzelne Kontaktfinger 13 werden federbelastet gegen einen zentrisch angeordneten Stützsockel 14 gepresst. Bei einem Einschieben eines elektrischen Leitelementes in den zweiten Steckkontakt 10 werden die freien Enden der Kontaktfinger 13 gegen die von den Federn ausgehenden Kräfte gepresst, wobei die auf dem Stützsockel 14 aufliegenden Kontaktfinger ein Gegenlager bilden. Um eine sichere Schwenkbewegung der Kontaktfinger 13 zu bewirken, sind die Kontaktfinger 13 mit entsprechenden Verdickungen an ihren Enden versehen. In dem Stützsockel 14 ist eine umlaufende Nut angeordnet, in welcher die gegen den Stützsockel gepressten Enden der Kontaktfinger 13 gelagert sind. In gleicher Art könnte beispielsweise auch das Einzusteckende Leiterelement mit einer Nut versehen sein, so dass die am freien Ende der Kontaktfinger 13 befindlichen Verdickungen dort einrasten und dadurch eine federbelastete Sicherung der Kontaktverbindung sichergestellt ist.

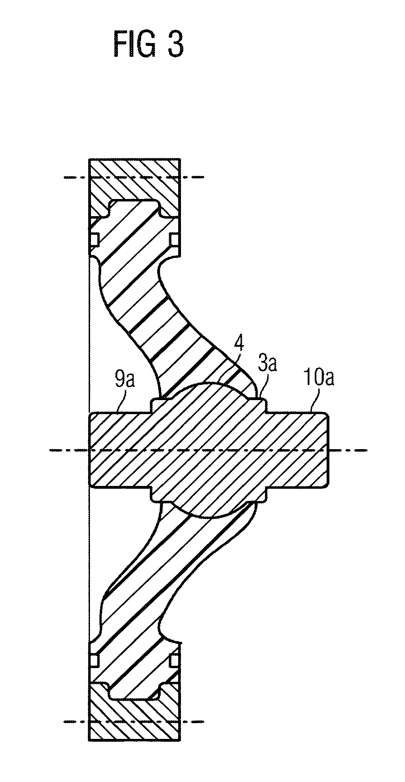

In der Figur 3 ist ein zweiter Scheibenisolator dargestellt, der jedoch nicht Teil der Erfindung ist. Dieser Scheibenisolator weist prinzipiell einen gleichartigen Aufbau wie der in der Figur 1 dargestellte Scheibenisolator auf. Lediglich die Ausgestaltung des elektrischen Leiters 3a ist abweichend. Daher wird im Folgenden die Ausgestaltung des elektrischen Leiters 3a des zweiten Scheibenisolators beschrieben. Der elektrische Leiter 3a des zweiten Scheibenisolators weist ebenfalls einen konvexen Abschnitt 4 auf. An den konvexen Abschnitt 4 schließen sich in axialer Richtung jeweils ein erster Steckkontakt 9a sowie ein zweiter Steckkontakt 10a. Die Steckkontakte 9a, 10a sind dabei als Kontaktstifte ausgebildet, so dass an ihren Enden mit entsprechenden elastischen Buchsen versehene elektrische Leiterelemente aufschiebbar sind. Wie auch bei dem in der Figur 1 gezeigten elektrischen Leiter 3, sind auch bei dem in der Figur 3 gezeigten elektrischen Leiter 3a, die Steckkontakte 9a, 10a unmittelbar angeformt. Vorteilhaft ist eine einstückige Ausgestaltung um die Übergangswiderstände möglichst zu minimieren. Der elektrische Leiter 3a ist als massives Bauteil ausgestaltet, so dass sich auch hier eine gasdichte Wand im Bereich der Einbettung in den Isolierkörper ausbildet.

Darüber hinaus kann auch vorgesehen sein, dass Kombinationen von Merkmalen der in den Figuren 1, 2 und 3 dargestellten Steckkontakte an einem einzigen Scheibenisolator genutzt werden. So kann beispielsweise vorgesehen sein, dass jeweils einer der Steckkontakte als Steckbuchse ausgebildet sind und der andere der Steckkontakte stiftförmig ausgebildet ist. Dadurch wird eine verdrehsichere Montage ermöglicht. Weiterhin können auch mehrere elektrische Leiter an einem gemeinsamen Scheibenisolator angeordnet sein. So sind mehrphasige Stromsystem kostengünstig voneinander isolierbar.

## Patentansprüche

1. Scheibenisolator mit einem Isolierkörper (1) und mit einer ersten und einer zweiten Anpressfläche (5, 6) sowie mit zumindest einem sich in axialer Richtung senkrecht zu den Anpressflächen erstreckenden, den Isolierkörper (1) durchsetzenden elektrischen Leiter (3,3a), welcher auf der Seite der ersten Anpressfläche einen ersten Steckkontakt (9,9a) und auf der Seite der zweiten Anpressfläche einen zweiten Steckkontakt (10,10a) aufweist, wobei der elektrische Leiter (3,3a) in den Isolierkörper (1) eingebettet ist und im Bereich der Einbettung einen konvexen Abschnitt (4) aufweist,
**dadurch gekennzeichnet, dass**
der elektrische Leiter (3, 3a) gasdicht in den Isolierkörper eingebettet ist und zumindest einer der Steckkontakte (9,9a; 10,10a) zumindest teilweise von dem konvexen Abschnitt (4) umgeben ist.

2. Scheibenisolator nach Anspruch 1,
**dadurch gekennzeichnet, dass**
der Isolierkörper (1) eine konische Wölbung aufweist, unter welcher über einer Ebene, in der eine der Anpressflächen (5,6) liegt, ein Aufnahmeraum gebildet ist, in welchem einer der Steckkontakte (9,9a) angeordnet ist.

3. Scheibenisolator nach Anspruch 1 oder 2,
**dadurch gekennzeichnet, dass**
der elektrische Leiter (3,3a) zumindest im Bereich des konvexen Abschnittes (4) eine gasdichte Wand (12) aufweist.

4. Scheibenisolator nach einem der Ansprüche 1 bis 3,
**dadurch gekennzeichnet, dass**
beide Steckkontakte (9, 10) als Steckbuchse ausgebildet sind.

5. Scheibenisolator nach einem der Ansprüche 1 bis 3,
**dadurch gekennzeichnet, dass**
beide Steckkontakte (9a, 10a) stiftförmig ausgestaltet sind.

6. Scheibenisolator nach einem der Ansprüche 1 bis 3,
**dadurch gekennzeichnet, dass**
einer der Steckkontakte (9) als Steckbuchse und einer der Steckkontakte (10) stiftförmig ausgestaltet ist.

7. Scheibenisolator nach einem der Ansprüche 1 bis 6,
**dadurch gekennzeichnet, dass**
der Isolierkörper (1) ein Gießharzkörper ist.

## Claims

1. Disc insulator having an insulating body (1) and having a first and a second contact area (5, 6) and also having at least one electrical conductor (3, 3a) which extends in the axial direction perpendicular to the contact areas, passes through the insulating body (1) and has a first plug contact (9, 9a) on the side of the first contact area and a second plug contact (10, 10a) on the side of the second contact area, wherein the electrical conductor (3, 3a) is embedded in the insulating body (1) and has a convex section (4) in the region of the embedding, **characterized in that** the electrical conductor (3, 3a) is embedded in the insulating body in a gas-tight manner and at least one of the plug contacts (9, 9a; 10, 10a) is surrounded at least partially by the convex section (4).

2. Disc insulator according to Claim 1, **characterized in that** the insulating body (1) has a conical curvature beneath which a receiving space in which one of the plug contacts (9, 9a) is arranged is formed over a plane in which one of the contact areas (5, 6) is situated.

3. Disc insulator according to Claim 1 or 2, **characterized in that** the electrical conductor (3, 3a) has a gas-tight wall (12) at least in the region of the convex section (4).

4. Disc insulator according to one of Claims 1 to 3, **characterized in that** the two plug contacts (9, 10) are in the form of a plug socket.

5. Disc insulator according to one of Claims 1 to 3, **characterized in that** the two plug contacts (9a, 10a) are of pin-like design.

6. Disc insulator according to one of Claims 1 to 3, **characterized in that** one of the plug contacts (9) is designed as a plug socket and one of the plug contacts (10) is of pin-like design.

7. Disc insulator according to one of Claims 1 to 6, **characterized in that** the insulating body (1) is a cast resin body.

## Revendications

1. Disque isolant ayant un corps (1) isolant et une première et une deuxième surfaces (5, 6) de pression, ainsi qu'au moins un conducteur (3, 3a) électrique, qui s'étend dans une direction axiale par rapport aux surfaces de pression, qui traverse le corps (1) isolant et qui a, du côté de la première surface de pression, un premier contact (9, 9a) d'enfichage et, du côté de la deuxième surface de pression, un deuxième contact (10, 10a) d'enfichage, le conducteur (3, 3a) électrique étant incorporé dans le corps (1) isolant et ayant un tronçon (4) convexe dans la région de l'incorporation,
**caractérisé en ce que**
le conducteur (3, 3a) électrique est incorporé d'une manière étanche au gaz dans le corps isolant et au moins l'un des contacts (9, 9a ; 10, 10a) d'enfichage est entouré au moins en partie du tronçon (4) convexe.

2. Disque isolant suivant la revendication 1,
**caractérisé en ce que** le corps (1) isolant a une voussure conique, sous laquelle est formé, au dessus d'un plan dans lequel se trouve l'une des surfaces (5, 6) de pression, un espace de réception, dans lequel est disposé l'un des contacts (9, 9a) d'enfichage.

3. Disque isolant suivant la revendication 1 ou 2,
**caractérisé en ce que** le conducteur (3, 3a) électrique a une paroi (12) étanche au gaz au moins dans la région du tronçon (4) conique.

4. Disque isolant suivant l'une des revendications 1 à 3,
**caractérisé en ce que** les deux contacts (9, 10) d'enfichage sont constitués sous la forme de douille d'enfichage.

5. Disque isolant suivant l'une des revendications 1 à 3,
**caractérisé en ce que** les deux contacts (9a, 10a) d'enfichage sont conformés sous forme de fiche.

6. Disque isolant suivant l'une des revendications 1 à 3,
**caractérisé en ce que** l'un des contacts (9) d'enfichage est conformé en douille et l'un des contacts (10) d'enfichage en fiche.

7. Disque isolant suivant l'une des revendications 1 à 6,
**caractérisé en ce que** le corps (1) isolant est un corps en résine de coulée.
